# EUROPÄISCHE PATENTSCHRIFT

(11) **EP 1 365 537 B1**
(45) Veröffentlichungstag und Bekanntmachung des Hinweises auf die Patenterteilung: **07.07.2004**
(21) Anmeldenummer: 02405418.1
(22) Anmeldetag: 24.05.2002
(51) Int. Cl.: H04L 9/32

(54) **Vorrichtungen und Verfahren zur Zertifizierung von digitalen Unterschriften**
Systems and method for certifying digital signatures
Systèmes et procédé servant à certifier des signatures numériques

(43) Veröffentlichungstag der Anmeldung: 26.11.2003
(73) Patentinhaber: Swisscom Mobile AG, 3050 Bern (CH)
(72) Erfinder: Baessler, Felix, 3014 Bern (CH)
(74) Vertreter: BOVARD AG - Patentanwälte

(56) Entgegenhaltungen:
- EP-A- 0 892 521
- WO-A-01/26400
- WO-A-01/49054
- LEVI A ET AL: "A Multiple Signature Based Certificate Verification Scheme" PROCEEDINGS OF BAS'98, THE THIRD SYMPOSIUM ON COMPUTER NETWORKS, 25-26 JUNE 1998, IZMIR, TÜRKIYE, [Online] 1998, Seiten 1-10, XP002210349 Gefunden im Internet: <URL:http://citeseer.nj.nec.com/cache/pape rs/cs/2506/http:zSzzSzmercan.cmpe.boun.edu .trzSz~levizSzbas98.pdf/a-multiple-signatu re-based.pdf> [gefunden am 2002-11-13]

## Beschreibung

### Technisches Gebiet

Die vorliegende Erfindung betrifft ein kryptographisches Sicherheitsverfahren sowie dafür geeignete elektronische Vorrichtungen, insbesondere tragbare elektronische Sicherheitsmodule. Die Erfindung betrifft insbesondere ein kryptographisches Sicherheitsverfahren sowie dafür geeignete elektronische Vorrichtungen, in welchen ein geheimer privater Kundenschlüssel eines digitalen Schlüsselpaars, das aus dem geheimen privaten Kundenschlüssel und einem öffentlichen Kundenschlüssel besteht, gespeichert wird und in welchen eine digitale Kundensignatur aus zu signierenden Objektdaten mit dem privaten Kundenschlüssel erzeugt wird.

### Stand der Technik

Die Erzeugung von digitalen Signaturen oder elektronischen Signaturen und Unterschriften, wie sie auch genannt werden, mittels kryptographischer Verfahren ist allgemein bekannt. Herkömmlicherweise wird mittels einer Hash-Funktion ein Kenndatensatz, ein so genannter Fingerprint, aus den zu signierenden Objektdaten gewonnen. Die Objektdaten sind beispielsweise ein digitales Daten- oder Textfile. Der Fingerprint ist der Teil der Objektdaten, der für die Erzeugung der digitalen Signatur verwendet wird. Die digitale Signatur wird mittels eines asymmetrischen Verschlüsselungsverfahrens aus dem Fingerprint gewonnen. Asymmetrische Verschlüsselungsverfahren sind dadurch gekennzeichnet, dass für die Verschlüsselung und für die Entschlüsselung jeweils verschiedene digitale Schlüssel zum Einsatz kommen: ein öffentlicher Schlüssel (Public Key) und ein geheimer privater Schlüssel (Private Key). Die digitale Signatur der zu signierenden Objektdaten wird durch die Verschlüsselung des Fingerprints mit dem privaten Schlüssel des Unterzeichnenden erzeugt.

Für die Sicherstellung und Kontrolle der Bindung eines öffentlichen Schlüssels an die Identität einer (juristischen) Person werden Zertifikate für öffentliche Schlüssel verwendet, so genannte Public Key Zertifikate. Ein Public Key Zertifikat wird dadurch erzeugt, dass der öffentliche Schlüssel des Schlüsselhalters zusammen mit einer Identifizierung dieses Schlüsselhalters durch einen Sicherheitsanbieter, eine so genannte Certificate Authority, elektronisch unterschrieben wird. Das heisst, aus dem öffentlichen Schlüssel und der Identifizierung wird ein Fingerprint erzeugt und der Fingerprint wird mit dem privaten Schlüssel des Sicherheitsanbieters verschlüsselt. Für die Verifizierung von digitalen Signaturen werden durch den Sicherheitsanbieter öffentlich zugängliche Zertifikatverzeichnisse (Certificate Directories) mit Public Key Zertifikaten bereitgestellt. In diesen Verzeichnissen sind auch Sperrlisten mit gesperrten Zertifikaten angeführt (Revocation Lists). Die Kosten für diese durch den Sicherheitsanbieter betriebene Infrastruktur (Public Key Infrastructure, PKI) werden typischerweise den Schlüsselhaltern, das heisst den Kunden des Sicherheitsanbieters, verrechnet.

In bekannten Anwendungen wird das digitale Schlüsselpaar, ein Signierungsmodul zum Erzeugen einer digitalen Signatur mit dem privaten Schlüssel, und optional ein Zertifikat des öffentlichen Schlüssels auf tragbaren elektronischen Sicherheitsmodulen gespeichert respektive implementiert. Für erhöhte Sicherheit wird der private Schlüssel oft direkt im Sicherheitsmodul erzeugt und braucht dieses nie zu verlassen. Solche Sicherheitsmodule, die in der Regel als Chipkarten ausgeführt sind, müssen durch ihre Benutzer nur dann mit einer elektronischen Vorrichtung, beispielsweise ein Kommunikationsendgerät, verbunden werden, wenn Objektdaten bei Transaktion mit einer digitalen Signatur zu versehen sind. Die Objektdaten können dann zusammen mit der digitalen Signatur und optional mit dem Zertifikat des öffentlichen Schlüssels an einen Empfänger übermittelt werden. Der Empfänger muss zunächst das Zertifikat des öffentlichen Schlüssels prüfen und die Identität des Senders feststellen, und danach die Signatur verifizieren, das heisst die Korrektheit der Signatur überprüfen. Falls den Objektdaten kein Zertifikat des öffentlichen Schlüssels beigefügt wurde, muss sich der Empfänger zudem dieses Zertifikat aus einem Zertifikatsverzeichnis beschaffen und sicherheitshalber die Sperrlisten konsultieren. Wenn die Identität des Senders bestimmt und die Korrektheit der digitalen Signatur festgestellt wurde, müssen zusätzliche transaktionsspezifische Attribute des Senders angefragt und überprüft werden, bevor die betreffende Transaktion abgewickelt werden kann. Beispiele für solche senderspezifische Attribute umfassen finanztechnische Angaben wie Zahlungsmodus, Bankkonto, Kreditkartennummer, Kreditlimiten oder Bonität, Gültigkeitsangaben wie Verfalldatum, Aktualisierungsdatum oder Gültigkeitsdauer, weitere Identifizierungsangaben wie Kundennummer, Mitgliedernummer, Mitarbeiternummer oder Ausweisnummer oder Berechtigungsangaben wie Tickets, Abonnemente oder andere Zutritts- und Benutzerrechte.

Die oben beschriebenen bekannten Sicherheitsmechanismen und Sicherheitsmodule weisen verschiedene Nachteile auf. Beispielsweise ist die Infrastruktur für die öffentlichen Zertifikate (PKI) ziemlich aufwendig und die Kunden sind oft nicht bereit die daraus entstehenden laufenden Kosten zu übernehmen. Zudem gestalten sich auch Transaktionen, die diese bekannten Sicherheitsmechanismen und Sicherheitsmodule verwenden, oft als kompliziert, da für die Beschaffung des öffentlichen Zertifikats und die Überprüfung der transaktionsspezifischen Attribute des Senders zusätzliche Schritte und Datentransfers zwischen mehreren Kommunikationspartnern notwendig sind. Schliesslich weisen die Zertifikate für die öffentlichen Schlüssel eine statische Natur auf, da sie typischerweise einmal erzeugt und dann über längere Zeit, beispielsweise über mehrere Jahre hinweg, verwendet werden, was das Risiko eines Missbrauchs durch unberechtigte Dritte erhöht.

Im Dokument XP002210349, "A Multiple Signature Certificate Verification Scheme", Proceedings of BAS'98, The Third Symposium on Computer Networks, 25.-26. Juni 1998, Izmir, Türkei, wurde von A. Levi et al. ein Verfahren beschrieben, in welchem die Integrität und Korrektheit einer ersten digitalen Signatur dadurch verbessert wird, dass die erste digitale Signatur ihrerseits mit einer zweiten digitalen Signatur, einer so genannten Nested Signature versehen wird. Dabei wird eine Nested Signature als digitale Signatur aus der ersten digitalen Signatur erzeugt, das heisst die Nested Signature wird durch die Verschlüsselung der ersten digitalen Signatur mit einem privaten Schlüssel einer Instanz, die dadurch die Integrität und Korrektheit der ersten digitalen Signatur bekräftigt, erzeugt.

### Darstellung der Erfindung

Es ist eine Aufgabe der vorliegenden Erfindung, ein neues kryptographisches Sicherheitsverfahren sowie dafür geeignete elektronische Vorrichtungen vorzuschlagen, welche nicht die Nachteile des Stands der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Im kryptographischen Sicherheitsverfahren und in den dafür geeigneten elektronischen Vorrichtungen wird ein geheimer privater Kundenschlüssel eines ersten digitalen Schlüsselpaars, das aus dem geheimen privaten Kundenschlüssel und einem öffentlichen Kundenschlüssel besteht, gespeichert und mit dem privaten Kundenschlüssel wird aus zu signierenden Objektdaten eine digitale Kundensignatur erzeugt.

Der Fachmann wird verstehen, dass in den elektronischen Vorrichtungen jeweils mehrere solcher geheimen privaten Kundenschlüssel gespeichert werden können und dass von den Kunden jeweils einer davon für die nachfolgend beschriebenen Prozesse ausgewählt werden kann.

Die oben genannten Ziele werden durch die vorliegende Erfindung insbesondere dadurch erreicht, dass in der elektronischen Vorrichtung ein geheimer privater Schlüssel eines zweiten digitalen Schlüsselpaars, das aus dem geheimen privaten Schlüssel eines Sicherheitsanbieters und einem öffentlichen Schlüssel des Sicherheitsanbieters besteht, gespeichert wird, und dass in der elektronischen Vorrichtung mit dem privaten Schlüssel des Sicherheitsanbieters ein digitales Signaturzertifikat aus der Kundensignatur erzeugt wird, vorzugsweise aus einem Fingerprint, insbesondere aus einem Hash, der Kundensignatur. Die Bereitstellung des Signaturzertifikats, das durch elektronisches Signieren der Kundensignatur mit dem privaten Schlüssel des Sicherheitsanbieters erzeugt wird, hat den Vorteil, dass dadurch die Kundensignatur durch den Sicherheitsanbieter zertifiziert werden kann, ohne dass die Infrastruktur des Sicherheitsanbieters zur Erzeugung des Signaturzertifikats in Anspruch genommen werden muss und ohne dass zusätzliche Datenanfragen betreffend das Signaturzertifikat an Zertifikatsverzeichnisse erforderlich sind. Solange die Kundensignatur und das Signaturzertifikat unmittelbar hintereinander durch einen untrennbaren Prozess erzeugt werden, ist sichergestellt, dass die korrekte Kundensignatur mit dem privaten Schlüssel des Sicherheitsanbieters zertifiziert wird. Die dynamische Erzeugung des Signaturzertifikats hat zudem den Vorteil, dass es stets neu erzeugt wird und dass dadurch die Sicherheit, beispielsweise im Vergleich mit einem statischen Public Key Zertifikat, erhöht wird.

In einer Ausführungsvariante wird in der elektronischen Vorrichtung vor der Erzeugung des digitalen Signaturzertifikats der öffentliche Kundenschlüssel authentifiziert und die Kundensignatur wird unter Verwendung des authentifizierten öffentlichen Kundenschlüssels und der zum Erzeugen der Kundensignatur verwendeten Objektdaten, beispielsweise der Hash der Objektdaten, verifiziert. Die Authentifizierung des öffentlichen Schlüssels und die Verifizierung der Kundensignatur vor der Erzeugung des digitalen Signaturzertifikats haben den Vorteil, dass die Kundensignatur und das Signaturzertifikat durch voneinander getrennte Prozesse erzeugt werden können, ohne dass die Sicherheit beeinträchtigt wird. Dadurch werden Ausführungsvarianten möglich, in denen die Kundensignatur und das Signaturzertifikat durch Prozesse in zwei verschiedenen physikalischen Einheiten erzeugt werden, beispielsweise in verschiedenen elektronischen Sicherheitsmodulen wie Chipkarten, die über Kommunikationsverbindungen in einer elektronischen Vorrichtung miteinander verbunden sind.

Vorzugsweise wird in der elektronischen Vorrichtung eine Kundenidentifizierung gespeichert und das Signaturzertifikat wird zudem aus der Kundenidentifizierung erzeugt. Durch die Erzeugung des Signaturzertifikats aus einem Fingerprint der Kundensignatur und der Kundenidentifizierung kann eine zertifizierte Anbindung der Identität des Kunden an die Kundensignatur sichergestellt werden, ohne dass die Infrastruktur des Sicherheitsanbieters in Anspruch genommen werden muss.

Vorzugsweise werden in der elektronischen Vorrichtung persönliche Kundenattribute gespeichert und das Signaturzertifikat wird zudem aus den Kundenattributen erzeugt. Durch die Erzeugung des Signaturzertifikats aus einem Fingerprint der Kundensignatur und den Kundenattributen kann eine zertifizierte Anbindung der Kundenattribute an die Kundensignatur sichergestellt werden, ohne dass die Infrastruktur des Sicherheitsanbieters in Anspruch genommen werden muss. Zudem können die zertifizierten Kundenattribute zusammen mit der Kundensignatur, dem Signaturzertifikat und den Objektdaten direkt an den Empfänger übermittelt werden, so dass sich weitere Schritte und Datenübertragungen zur Ermittlung und Übertragung dieser Kundenattribute erübrigen.

Vorzugsweise werden in der elektronischen Vorrichtung Attributaktualisierungsinstruktionen entgegengenommen und die Kundenattribute werden basierend auf entgegengenommenen Attributaktualisierungsinstruktionen aktualisiert. Durch Verbindung der elektronischen Vorrichtung mit einem Datenterminal oder mit einem Kommunikationsmodul können somit die Kundenattribute lokal in einer Dienststelle, respektive ferngesteuert über ein Kommunikationsnetz, ständig aktualisiert werden.

In einer Ausführungsvariante werden in der elektronischen Vorrichtung aktuelle Zeitangaben bestimmt und das Signaturzertifikat wird zudem aus den bestimmten Zeitangaben erzeugt. Durch die Erzeugung des Signaturzertifikats aus einem Fingerprint der Kundensignatur und den aktuellen Zeitangaben kann eine zertifizierte Anbindung der aktuellen Zeitangaben über den Zeitpunkt der Erzeugung der Kundensignatur an die Kundensignatur sichergestellt werden. Dies hat den Vorteil, dass sichergestellt werden kann, dass die Kundensignatur neu und aktuell erzeugt wurde und nicht bloss eine alte Kopie ist. Zudem kann ein zertifizierter Transaktionszeitpunkt festgehalten werden.

In einer Ausführungsvariante wird das Signaturzertifikat zudem aus dem Fingerprint der zu signierenden Objektdaten erzeugt, der für die Erzeugung der digitalen Kundensignatur verwendet wird. Vorzugsweise wird bei der Erzeugung des Signaturzertifikats ein weiterer Fingerprint aus den für die Erzeugung des Signaturzertifikats zu verwendenden Daten (die Zertifikatdaten) erzeugt, aus dem erzeugten weiteren Fingerprint wird mit dem privaten Schlüssel des Sicherheitsanbieters eine digitale Zertifikatsignatur erzeugt, und das Signaturzertifikat wird aus der erzeugten Zertifikatsignatur und dem erzeugten weiteren Fingerprint gebildet. Durch die Erzeugung des Signaturzertifikats aus einem Fingerprint der für die Erzeugung des Signaturzertifikats zu verwendenden Zertifikatdaten, insbesondere der Fingerprint der Kundensignatur, die Kundenidentifizierung, die Kundenattribute, die aktuellen Zeitangaben und der Fingerprint der zu signierenden Objektdaten, kann eine zertifizierte Anbindung dieser Daten an die Kundensignatur sichergestellt werden.

Vorzugsweise werden in der elektronischen Vorrichtung Schlüsselverwaltungsinstruktionen entgegengenommen und die in der elektronischen Vorrichtung gespeicherten Schlüssel werden basierend auf entgegengenommenen Schlüsselverwaltungsinstruktionen aktiviert, deaktiviert oder aktualisiert. Durch Verbindung der elektronischen Vorrichtung mit einem Datenterminal oder mit einem Kommunikationsmodul können somit die gespeicherten Schlüssel lokal in einer Dienststelle des Sicherheitsanbieters respektive durch den Sicherheitsanbieter bevorzugt ferngesteuert über ein Kommunikationsnetz verwaltet werden. Dadurch können die digitalen Schlüssel periodisch oder bei Bedarf geändert oder individuell gesperrt werden, wodurch die Sicherheit erhöht wird.

Die für das vorliegende kryptographische Sicherheitsverfahren geeigneten elektronischen Vorrichtungen umfassen insbesondere auch tragbare elektronische Sicherheitsmodule, beispielsweise Chipkarten.

### Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:
Figur 1 zeigt ein Blockdiagramm, welches schematisch ein mit einem Kommunikationsendgerät verbundenes tragbares elektronisches Sicherheitsmodul und eine weitere elektronische Vorrichtung mit einem ersten und einem zweiten elektronischen Sicherheitsmodul darstellt, welche über ein Kommunikationsnetz mit einer Zentrale eines Sicherheitsanbieters und mit einem Endgerät eines Transaktionspartners verbindbar sind.
Figur 2 zeigt ein Zeitdiagramm, das schematisch den Verfahrensablauf am Beispiel einer Bestellungstransaktion für den Fall illustriert, in welchem die Kundensignatur und das Signaturzertifikat durch einen untrennbaren Prozess in einem Sicherheitsmodul erzeugt werden.
Figur 3 zeigt ein Zeitdiagramm, das schematisch den Verfahrensablauf am Beispiel einer Bestellungstransaktion für den Fall illustriert, in welchem die Kundensignatur und das Signaturzertifikat durch getrennte Prozesse in zwei verschiedenen Sicherheitsmodulen erzeugt werden.

### Wege zur Ausführung der Erfindung

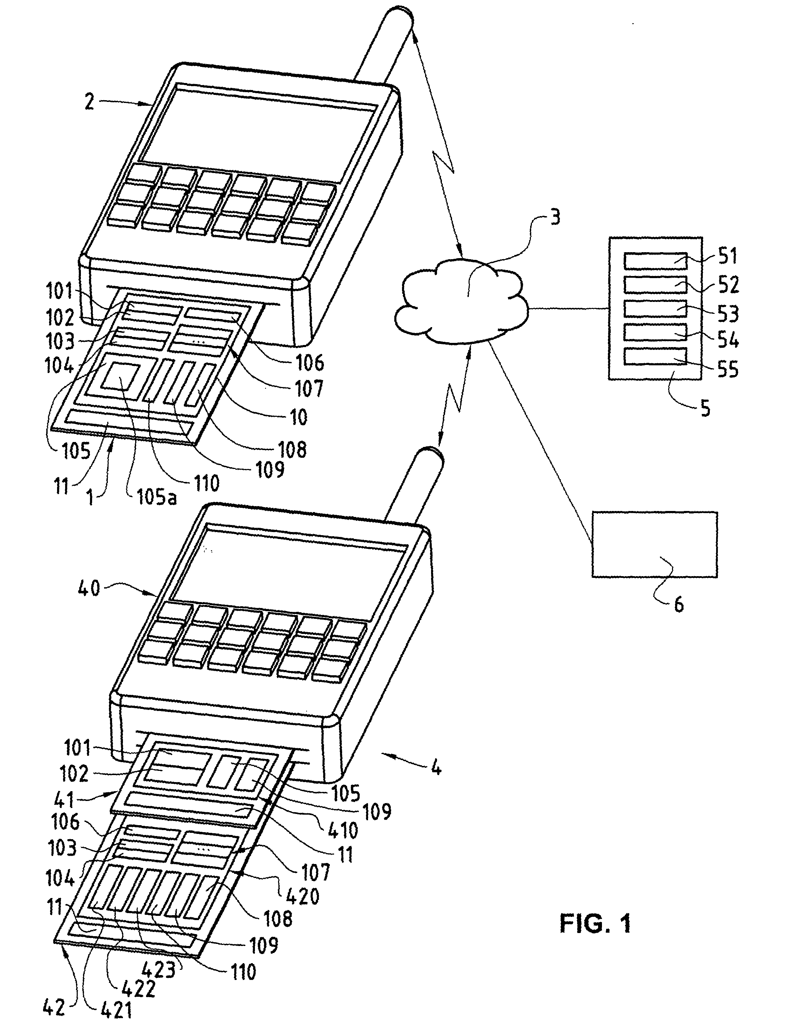

In den Figuren 1, 2 und 3 werden einander entsprechende, gleiche Komponenten durch gleiche Bezugszeichen bezeichnet.

Als Kunde wird im Folgenden der Besitzer und Benutzer der nachfolgend beschriebenen Sicherheitsmodule bezeichnet. Der Sicherheitsanbieter ist im Folgenden identisch mit der in der Einleitung beschriebenen Certificate Authority.

In der Figur 1 bezeichnet das Bezugszeichen 2 ein mit dem Kommunikationsnetz 3 verbindbares Kommunikationsendgerät. Das Kommunikationsnetz 3 umfasst ein Mobilfunknetz und/oder ein Festnetz. Das Mobilfunknetz ist beispielsweise ein GSM- (Global System for Mobile Communication) oder ein UMTS-Netz (Universal Mobile Telephone System) oder ein anderes, beispielsweise satellitenbasiertes Mobilfunknetz. Das Festnetz ist beispielsweise das öffentliche geschaltete Telefonnetz, ein ISDN-Netz (Integrated Services Digital Network) oder das Internet. Dementsprechend ist das Kommunikationsendgerät 2 ein Mobilfunktelefon oder ein Laptop- oder PDA-Computer (Personal Digital Assistant) mit einem Kommunikationsmodul für die Kommunikation über ein Mobilfunknetz, oder ein Kommunikationsendgerät mit einem Kommunikationsmodul für die Kommunikation über ein Festnetz, beispielsweise ein PC (Personal Computer).

In der Figur 1 bezeichnet das Bezugszeichen 1 ein tragbares elektronisches Sicherheitsmodul, das entfernbar mit dem Kommunikationsendgerät 2 verbunden ist. Das Sicherheitsmodul 1 ist über eine kontaktlose oder eine kontaktbehaftete Schnittstelle mit dem Kommunikationsendgerät 2 verbunden. Das Sicherheitsmodul 1 umfasst mindestens einen Prozessor 11 und einen elektronischen Datenspeicher 10 zur Speicherung von digitalen Daten und Softwareprogrammen. Das Sicherheitsmodul 1 ist vorzugsweise als Chipkarte, beispielsweise als SIM-Karte (Subscriber Identity Module) ausgeführt.

Im elektronischen Datenspeicher 10 sind ein erstes digitales Schlüsselpaar, bestehend aus einem öffentlichen Kundenschlüssel 101 und aus einem geheimen privaten Kundenschlüssel 102, und ein zweites digitales Schlüsselpaar, bestehend aus einem öffentlichen Schlüssel des Sicherheitsanbieters 103 und aus einem geheimen privaten Schlüssel des Sicherheitsanbieters 104, gespeichert. In einer Ausführungsvariante können auch nur der geheime private Kundenschlüssel 102 und der geheime private Schlüssel des Sicherheitsanbieters 104 im Datenspeicher 10 gespeichert werden, und der öffentliche Kundenschlüssel sowie der öffentliche Schlüssel des Sicherheitsanbieters öffentlich zugänglich auf einem Server abgelegt sein. Im Datenspeicher 10 ist auch eine Kundenidentifizierung 106 gespeichert, beispielsweise eine IMSI (International Mobile Subscriber Identity) oder eine andere Teilnehmer- oder Benutzeridentifizierung. Um die Anonymität des Kunden gegenüber Transaktionspartnern (anderen Dienstanbietern) zu wahren, ist die Kundenidentifizierung vorzugsweise eine durch den Sicherheitsanbieter verwaltete Kundennummer (oder ein Kundencode), der die Identität des betreffenden Kunden nur durch den Sicherheitsanbieter zugeordnet werden kann. Im Datenspeicher 10 sind zudem auch persönliche Kundenattribute 107 gespeichert, die beispielsweise finanztechnische Angaben umfassen wie Zahlungsmodus, Bankkonto, Kreditkartennummer, Kreditlimiten oder Bonität, Gültigkeitsangaben wie Verfalldatum, Aktualisierungsdatum oder Gültigkeitsdauer, weitere Identifizierungsangaben wie Kundennummern oder Mitgliedernummern bei Transaktionspartnern, Mitarbeiternummer oder Ausweisnummer, oder Berechtigungsangaben wie Tickets, Abonnemente oder andere Zutritts- und Benutzerrechte.

Das Sicherheitsmodul 1 umfasst auch funktionale Module 105, 108, 109 und 110, die vorzugsweise als programmierte Softwaremodule zur Steuerung des Prozessors 11 ausgeführt sind und im Datenspeicher 10 gespeichert sind. Der Fachmann versteht, dass die funktionalen Module 105, 108, 109 und 110 auch vollständig oder zum Teil hardwaremässig ausgeführt werden können. Die funktionalen Module 105, 108, 109 und 110 umfassen ein Signierungsmodul 105, ein Attributaktualisierungsmodul 108, ein Zeitbestimmungsmodul 109 und ein Schlüsselverwaltungsmodul 110.

Das Zeitbestimmungsmodul 109 bestimmt aktuelle Zeitangaben, welche das aktuelle Datum und die Uhrzeit umfassen. Das Zeitbestimmungsmodul 109 ist vollständig im Sicherheitsmodul 1 ausgeführt und umfasst einen Taktgenerator und Einstellregister. Das Zeitbestimmungsmodul 109 kann auch als reines programmiertes Softwaremodul ausgeführt sein, das die Zeitangaben über die Schnittstelle vom Kommunikationsendgerät 2 bezieht.

Das Signierungsmodul 105 umfasst kryptographische Funktionen um basierend auf einem asymmetrischen Verschlüsselungsverfahren (z.B. Rivest-Shamir-Adleman Verschlüsselung, RSA) eine digitale Kundensignatur aus zu signierenden Objektdaten mit dem privaten Kundenschlüssel 102 zu erzeugen. Die zu signierenden Objektdaten sind digitale Daten, beispielsweise ein digitales Text- oder Datenfile, die über die oben genannte Schnittstelle vom Kommunikationsendgerät 2 empfangen werden. Das Signierungsmodul 105 erzeugt vorerst einen Fingerprint (z.B. ein so genannter Hash) der zu signierenden Objektdaten (z.B. mit einer SHA1 Hash-Funktion) und daraus mit dem privaten Kundenschlüssel 102 die digitale Kundensignatur. Das Signierungsmodul 105 kann den Fingerprint der zu signierenden Objektdaten als Alternative auch von einem anderen Modul entgegennehmen. Das Signierungsmodul 105 speichert zudem die durch das Zeitbestimmungsmodul 109 bestimmten aktuellen Zeitangaben der erzeugten Kundensignatur zugeordnet ab.

In der Figur 1 bezeichnet das Bezugszeichen 5 eine Zentrale des Sicherheitsanbieters. Die Zentrale 5 umfasst mindestens einen mit dem Kommunikationsnetz 3 verbundenen Computer. Wie in der Figur 1 schematisch dargestellt ist, umfasst die Zentrale 5 programmierte Softwarefunktionen, nämlich Schlüsselverwaltungsfunktionen 51 zum Verteilen und Aktualisieren von digitalen Schlüsseln des Sicherheitsanbieters in den mit dem Kommunikationsnetz 3 verbindbaren Sicherheitsmodulen 1, 41, 42 und zum Aktivieren von neu generierten Kundenschlüsseln in den Sicherheitsmodulen 1, 41, 42, Schlüsselsperrfunktionen 52 zum Deaktivieren von Schlüsseln in den Sicherheitsmodulen 1, 41, 42 von gesperrten Kunden, Attributverwaltungsfunktionen 53 zum Aktualisieren, Hinzufügen und Löschen von Kundenattributen in den Sicherheitsmodulen 1, 41, 42, Archivfunktionen 54 zum Speichern und Verfügbarmachen von Public Key Zertifikaten der öffentlichen Kundenschlüssel in der Zentrale 5, und Verifizierungsfunktionen 55 zum Verifizieren von Kundensignaturen in Streitfällen.

Das Attributaktualisierungsmodul 108 nimmt über die oben genannte Schnittstelle Attributaktualisierungsinstruktionen entgegen, die im Kommunikationsendgerät 2 über das Kommunikationsnetz 3 von der Zentrale 5 des Sicherheitsanbieters empfangen werden. Das Attributaktualisierungsmodul 108 umfasst vorzugsweise kryptographische Funktionen zur Verifizierung, dass die Attributaktualisierungsinstruktionen von der berechtigten Zentrale 5 des Sicherheitsanbieters übermittelt wurden. Das Attributaktualisierungsmodul 108 aktualisiert die persönlichen Kundenattribute 107 basierend auf den entgegengenommenen und verifizierten Attributaktualisierungsinstruktionen, dabei werden Werte von Kundenattributen aktualisiert, Kundenattribute hinzugefügt oder gelöscht.

Das Schlüsselverwaltungsmodul 110 nimmt über die oben genannte Schnittstelle Schlüsselverwaltungsinstruktionen entgegen, die im Kommunikationsendgerät 2 über das Kommunikationsnetz 3 von der Zentrale 5 des Sicherheitsanbieters empfangen werden. Das Schlüsselverwaltungsmodul 110 umfasst vorzugsweise kryptographische Funktionen zur Verifizierung, dass die Schlüsselverwaltungsinstruktionen von der berechtigten Zentrale 5 des Sicherheitsanbieters übermittelt wurden. Das Schlüsselverwaltungsmodul 110 aktiviert, deaktiviert und aktualisiert die gespeicherten Schlüssel 101, 102, 103, 104 basierend auf den entgegengenommenen und verifizierten Schlüsselverwaltungsinstruktionen. Dadurch können durch die Zentrale 5 des Sicherheitsanbieters öffentliche und private Schlüssel 103, 104 des Sicherheitsanbieters verteilt und erneuert, neu generierte öffentliche und private Kundenschlüssel 101, 102 aktiviert, und die digitalen Schlüssel für gesperrte Kunden deaktiviert werden.

Das Signierungsmodul 105 umfasst zudem ein Zertifizierungsmodul 105a mit kryptographischen Funktionen zum Erzeugen eines digitalen Signaturzertifikats aus der Kundensignatur mit dem privaten Schlüssel des Sicherheitsanbieters 104. Das heisst, das Zertifizierungsmodul 105a umfasst kryptographische Funktionen, um basierend auf einem asymmetrischen Verschlüsselungsverfahren eine digitale Signatur (die Zertifikatsignatur) aus der Kundensignatur und weiteren für die Erzeugung des Signaturzertifikats zu verwendenden Daten (Zertifikatdaten) mit dem privaten Schlüssel des Sicherheitsanbieters 104 zu erzeugen. Die für die Erzeugung des Signaturzertifikats zu verwendenden Zertifikatdaten umfassen vorzugsweise neben dem Fingerprint der Kundensignatur weitere Zertifikatdaten:
- der für die Erzeugung der Kundensignatur verwendete Fingerprint der zu signierenden Objektdaten,
- Zeitangaben über den Zeitpunkt der Erzeugung der Kundensignatur,
- die Kundenidentifizierung 106,
- persönliche Kundenattribute107 sowie deren Aktualisierungsdatum (eventuell inklusive Uhrzeit), und
- Zeitangaben über den Zeitpunkt der Erzeugung der Signatur des Signaturzertifikats (Zertifikatsignatur).

Für die Erzeugung des Signaturzertifikats aus den obenstehend angeführten Zertifikatdaten erzeugt das Zertifizierungsmodul 105a zunächst einen Fingerprint (Hash) der den Fingerprint der Kundensignatur sowie vorzugsweise die obenstehend angeführten weiteren Zertifikatdaten umfasst. Danach erzeugt das Zertifizierungsmodul 105a die Zertifikatsignatur durch Verschlüsselung des vorgängig erzeugten Fingerprints mit dem privaten Schlüssel des Sicherheitsanbieters 104. Das Signaturzertifikat wird aus der Zertifikatsignatur und dem dafür verwendeten Fingerprint gebildet.

In einer Ausführungsvariante verwendet das Zertifizierungsmodul 105a in den Zertifikatdaten an Stelle des Fingerprints der Kundensignatur und an Stelle des für die Kundensignatur verwendeten Fingerprints direkt die Kundensignatur. Zudem wird kein Fingerprint der Zertifikatdaten gebildet, sondern die Zertifikatdaten selber werden mit dem privaten Schlüssel des Sicherheitsanbieters 104 verschlüsselt. Dadurch brauchen nur diese verschlüsselten Zertifikatdaten an einen Transaktionspartner übermittelt zu werden, die Kundensignatur kann beim Transaktionspartner mittels des öffentlichen Schlüssels des Sicherheitsanbieters aus den verschlüsselten Zertifikatdaten gewonnen werden.

In der Figur 1 bezeichnet das Bezugszeichen 4 eine elektronische Vorrichtung, welche ein Kommunikationsendgerät 40 und zwei tragbare elektronische Sicherheitsmodule 41 und 42 umfasst, die jeweils über eine kontaktlose oder eine kontaktbehaftete Schnittstelle entfernbar mit dem Kommunikationsendgerät 40 verbunden sind. Das Kommunikationsendgerät 40 umfasst ein Kommunikationsmodul für die Kommunikation über das Kommunikationsnetz 3. Das Kommunikationsendgerät 40 ist beispielsweise als Mobilfunktelefon, Laptop- oder PDA-Computer oder PC ausgeführt.

Die Sicherheitsmodule 41 und 42 umfassen jeweils mindestens einen Prozessor 11 und einen elektronischen Datenspeicher 410 respektive 420 zur Speicherung von digitalen Daten und Softwareprogrammen. Die Sicherheitsmodule 41 und 42 sind vorzugsweise als Chipkarten ausgeführt; das Sicherheitsmodul 41 ist beispielsweise eine SIM-Karte.

Im elektronischen Datenspeicher 410 ist ein digitales Schlüsselpaar, bestehend aus dem öffentlichen Kundenschlüssel 101 und aus dem geheimen privaten Kundenschlüssel 102, gespeichert. Das Sicherheitsmodul 41 umfasst auch die funktionalen Module 105 und 109, nämlich das Signierungsmodul 105 und das Zeitbestimmungsmodul 109. Der Fachmann versteht, dass der öffentlichen Kundenschlüssel auch in einem Public Key Zertifikat enthalten sein kann.

Im elektronischen Datenspeicher 420 ist ein digitales Schlüsselpaar, bestehend aus dem öffentlichen Schlüssel des Sicherheitsanbieters 103 und aus dem geheimen privaten Schlüssel des Sicherheitsanbieters 104, gespeichert. Im Datenspeicher 420 sind auch die Kundenidentifizierung 106 und die persönlichen Kundenattribute 107 gespeichert. Das Sicherheitsmodul 42 umfasst auch die funktionalen Module 108, 109 und 110, nämlich das Attributaktualisierungsmodul 108, das Zeitbestimmungsmodul 109 und das Schlüsselverwaltungsmodul 110.

Das Sicherheitsmodul 42 umfasst zudem weitere funktionale Module, nämlich das Verifizierungsmodul 421, das Zertifizierungsmodul 422 und das Authentifizierungsmodul 423, die vorzugsweise als programmierte Softwaremodule zur Steuerung des Prozessors 11 ausgeführt sind und im Datenspeicher 420 gespeichert sind. Der Fachmann versteht, dass die funktionalen Module 421, 422 und 423 auch vollständig oder zum Teil hardwaremässig ausgeführt werden können.

Das Authentifizierungsmodul 423 verifiziert die Authentizität der Kundenidentifizierung und des öffentlichen Kundenschlüssels. Das Authentifizierungsmodul 423 nimmt entweder den öffentlichen Kundenschlüssel oder das Public Key Zertifikat des öffentlichen Kundenschlüssels vom Sicherheitsmodul 41 entgegen. Das Authentifizierungsmodul 423 überprüft, ob der entgegengenommene öffentliche Kundenschlüssel bereits im Sicherheitsmodul 42 vorhanden (bekannt) und nicht gesperrt ist, oder es verifiziert das entgegengenommene Public Key Zertifikat des öffentlichen Kundenschlüssels mittels des öffentlichen Schlüssels des Sicherheitsanbieters und kontrolliert die darin enthaltene Kundenidentifizierung.

Das Verifizierungsmodul 421 nimmt eine digitale Kundensignatur und die zum Erzeugen der Kundensignatur verwendeten Objektdaten (entweder die Objektdaten oder der verwendete Fingerprint der Objektdaten) vom Sicherheitsmodul 41 entgegen. Unter Verwendung des öffentlichen Kundenschlüssels 101, der vom Authentifizierungsmodul 423 überprüft worden ist, verifiziert das Verifizierungsmodul 421 die entgegengenommene Kundensignatur, indem es diese entschlüsselt und mit dem Fingerprint der zum Erzeugen der Kundensignatur verwendeten Objektdaten vergleicht.

Die Funktionalität des Zertifizierungsmoduls 422 entspricht derjenigen des Zertifizierungsmoduls 105a. Das Zertifizierungsmodul 422 erzeugt aus der verifizierten Kundensignatur mit dem privaten Schlüssel des Sicherheitsanbieters 104 ein digitales Signaturzertifikat.

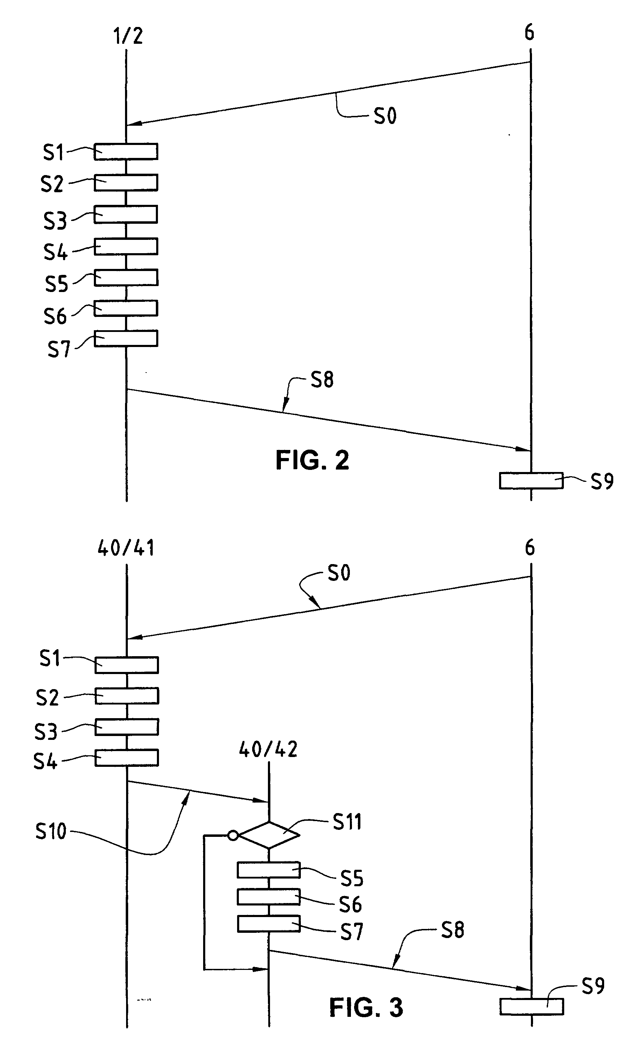

In den folgenden Abschnitten wird mit Bezug auf die Figur 2 der Verfahrensablauf am Beispiel einer Bestellungstransaktion für den Fall beschrieben, in welchem die Kundensignatur und das Signaturzertifikat im Sicherheitsmodul 1 durch einen untrennbaren Prozess erzeugt werden.

Im Schritt S0 wird optional ein elektronisches Bestellungsformular vom Endgerät 6 eines Transaktionspartners, das heisst vom Dienstanbieter, von welchem ein Dienst, eine Information oder eine Ware bestellt werden soll, über das Kommunikationsnetz 3 an das Kommunikationsendgerät 2 des Kunden übermittelt. Das Endgerät 6 des Transaktionspartners ist beispielsweise ein mit dem Internet verbundener Computer. Die Kommunikation zwischen dem Kommunikationsendgerät 2 und dem Endgerät 6 erfolgt beispielsweise über WAP (Wireless Application Protocol).

Im Schritt S1 werden die Bestellungsdaten (Transaktionsdaten) durch den Kunden bereitgestellt, beispielsweise durch Ausfüllen des elektronischen Bestellungsformulars, und dem Sicherheitsmodul 1 zur elektronischen Signierung übergeben. Im Schritt S1 werden vom Kunden auch diejenigen der persönlichen Kundenattribute107 selektiert, die mit der Bestellung an den Transaktionspartner übermittelt werden sollen (beispielsweise mittels eines programmierten Auswahlmoduls).

Im Schritt S2 wird im Sicherheitsmodul 1 ein Fingerprint (Hash) der zu signierenden Objektdaten, das heisst von den im Schritt S1 bereitgestellten Bestellungsdaten, erzeugt.

Im Schritt S3 werden im Sicherheitsmodul 1 die aktuellen Zeitangaben bestimmt.

Im Schritt S4 wird im Sicherheitsmodul 1 die Kundensignatur erzeugt, indem der im Schritt S2 erzeugte Fingerprint der Bestellungsdaten mit dem privaten Kundenschlüssel 102 verschlüsselt wird.

Im Schritt S5 wird im Sicherheitsmodul 1 ein Fingerprint (Hash) der im Schritt S4 erzeugten Kundensignatur erzeugt.

Im Schritt S6 werden im Sicherheitsmodul 1 (optional) die oben beschriebenen weiteren Zertifikatdaten zum Erzeugen des Signaturzertifikats bereitgestellt. Insbesondere wird im Schritt S6 auch ein Fingerprint (Hash) erzeugt, der aus dem im Schritt S5 erzeugten Fingerprint (Hash), der Kundensignatur, dem im Schritt S2 erzeugten Fingerprint (Hash) der Bestelldaten, den im Schritt S3 bestimmten Zeitangaben, der Kundenidentifizierung 106, den im Schritt S1 selektierten persönlichen Kundenattributen 107, und dem Aktualisierungsdatum der Kundenattribute besteht.

Im Schritt S7 wird im Sicherheitsmodul 1 das im Schritt S6 vorbereitete Signaturzertifikat fertig gestellt, indem der im Schritt S6 erzeugte Fingerprint (Hash) mit dem privaten Schlüssel des Sicherheitsanbieters 104 verschlüsselt wird, wodurch der Inhalt des Signaturzertifikats digital unterschrieben wird. Das Signaturzertifikat umfasst die Zertifikatsignatur und den dafür benötigten Fingerprint der Zertifikatdaten.

Im Schritt S8 werden die im Schritt S1 bereitgestellten Bestellungsdaten, die im Schritt S4 erzeugte Kundensignatur und das in den Schritten S6 und S7 erzeugte Signaturzertifikat durch das Kommunikationsendgerät 2 über das Kommunikationsnetz 3 an das Endgerät des Transaktionspartners 6 übermittelt.

Im Schritt S9 wird im Endgerät des Transaktionspartners 6 das im Schritt S8 empfangene Signaturzertifikat verifiziert, indem es mit dem öffentlichen Schlüssel des Sicherheitsanbieters entschlüsselt wird, der Fingerprint der Bestelldaten mit den Bestelldaten verglichen wird und die Zeitangaben über den Zeitpunkt der Kundensignatur überprüft wird. Auf Grund des verifizierten Signaturzertifikats kann im Endgerät des Transaktionspartners 6 festgestellt werden, dass der betreffende Kunde beim Sicherheitsanbieter bekannt ist, ob der Kunde auf Grund der mitgelieferten Kundenattribute für die Transaktion berechtigt und kreditwürdig ist, bis zu welchem Aktualisierungsdatum die Kundenattribute aktualisiert wurden, und dass die Kundensignatur im Bedarfsfall verifizierbar ist. Auf Grund dieser Informationen ist es für den Transaktionspartner in der Regel möglich, ohne zusätzliche Abklärungen die Lieferung gemäss den Bestelldaten auszulösen.

Die Schritte S1 bis S7 zur Erzeugung der Kundensignatur und des Signaturzertifikats können von der Bedingung abhängig gemacht werden, dass der Kunde im Kommunikationsendgerät 2 einen geheimen Code (Personal Identification Number oder Passwort) eingibt.

In den folgenden Abschnitten wird mit Bezug auf die Figur 3 der Verfahrensablauf am Beispiel einer Bestellungstransaktion für den Fall beschrieben, in welchem die Kundensignatur und das Signaturzertifikat durch getrennte Prozesse im Sicherheitsmodul 41 und im Sicherheitsmodul 42 erzeugt werden.

In den Schritten S0 bis S4 wird, wie oben beschrieben, im Sicherheitsmodul 41 die Kundensignatur aus den durch den Kunden bereitgestellten Bestellungsdaten erzeugt, indem ein Fingerprint der Bestellungsdaten mit dem privaten Kundenschlüssel 102 verschlüsselt wird.

Im Schritt S10 wird die im Schritt S4 erzeugte Kundensignatur sowie der öffentliche Kundenschlüssel respektive das entsprechende Public Key Zertifikat zusammen mit den im Schritt S1 bereitgestellten Bestellungsdaten und den im Schritt S3 bestimmten aktuellen Zeitangaben dem Sicherheitsmodul 42 übergeben. Die Selektion der Kundenattribute wird vorzugsweise erst in einem späteren Schritt vorgenommen. Die aktuellen Zeitangaben können auch erst im Sicherheitsmodul 42 bestimmt werden.

Im Schritt S11 wird im Authentifizierungsmodul 423 die Authentizität der Kundenidentifizierung und des im Schritt S10 entgegengenommenen öffentlichen Kundenschlüssels (mit oder ohne Public Key Zertifikat) festgestellt. Falls keine Authentifizierung erreicht werden kann, wird der Bestellprozess abgebrochen. Andernfalls wird im Sicherheitsmodul 42 die im Schritt S10 entgegengenommene Kundensignatur verifiziert, indem die Kundensignatur mit dem öffentlichen Kundenschlüssel entschlüsselt und die entschlüsselten Daten mit einem Fingerprint (Hash) der im Schritt S10 entgegengenommenen Bestellungsdaten verglichen wird. Falls die Kundensignatur nicht verifiziert werden kann, wird kein Signaturzertifikat erzeugt. Falls die Kundensignatur positiv verifiziert wird, werden im Schritt S11 vom Kunden auch diejenigen der persönlichen Kundenattribute107 selektiert, die mit der Bestellung an den Transaktionspartner übermittelt werden sollen und das Verfahren wird im Schritt S5 fortgeführt.

In den Schritten S5 bis S7 wird im Sicherheitsmodul 42 aus der verifizierten Kundensignatur wie oben beschrieben das Signaturzertifikat erzeugt.

Im Schritt S8 werden die im Schritt S1 bereitgestellten Bestellungsdaten, die im Schritt S4 erzeugte Kundensignatur und das im Schritt S7 erzeugte Signaturzertifikat durch das Kommunikationsendgerät 40 über das Kommunikationsnetz 3 an das Endgerät des Transaktionspartners 6 übermittelt und dort das empfangene Signaturzertifikat im Schritt S9 wie oben beschrieben verifiziert.

Abschliessend soll festgehalten werden, dass die Verwendung der Sicherheitsmodule 1, 41 und 42 nicht auf die Verwendung mit Kommunikationsendgeräten 2, 40 beschränkt ist, sondern dass sie in vernetzten wie auch in unvernetzten elektronischen Vorrichtungen verwendbar sind, beispielsweise in elektronischen Ton- und Bildaufzeichnungsgeräten zum Signieren von Tonrespektive Bilddaten, sowie in Netzwerk Gateway und Proxies.

## Patentansprüche

1. Tragbares elektronisches Sicherheitsmodul (1), umfassend:
- einen elektronischen Datenspeicher (10),
- einen im elektronischen Datenspeicher (10) gespeicherten geheimen privaten Kundenschlüssel (102) eines ersten digitalen Schlüsselpaars, das aus dem geheimen privaten Kundenschlüssel (102) und einem öffentlichen Kundenschlüssel (101) besteht, und
- ein Signierungsmodul (105) zum Erzeugen einer digitalen Kundensignatur aus zu signierenden Objektdaten mit dem privaten Kundenschlüssel (102),
**gekennzeichnet durch**:
- einen im elektronischen Datenspeicher (10) gespeicherten geheimen privaten Schlüssel eines zweiten digitalen Schlüsselpaars, das aus dem geheimen privaten Schlüssel eines Sicherheitsanbieters (104) und einem öffentlichen Schlüssel des Sicherheitsanbieters (103) besteht, und
- ein im Signierungsmodul (105) angebrachtes Zertifizierungsmodul (105a) zum Erzeugen eines digitalen Signaturzertifikats aus der Kundensignatur mit dem privaten Schlüssel des Sicherheitsanbieters (104).

2. Elektronisches Sicherheitsmodul (1) nach Anspruch 1, **dadurch gekennzeichnet, dass** es eine im elektronischen Datenspeicher (10) gespeicherte Kundenidentifizierung (106) umfasst, und dass das Zertifizierungsmodul (105a) so beschaffen ist, dass es das Signaturzertifikat zudem aus der Kundenidentifizierung (106) erzeugt.

3. Elektronisches Sicherheitsmodul (1) nach einem der Ansprüche 1 oder 2, **dadurch gekennzeichnet, dass** es im elektronischen Datenspeicher (10) gespeicherte persönliche Kundenattribute (107) umfasst, und dass das Zertifizierungsmodul (105a) so beschaffen ist, dass es das Signaturzertifikat zudem aus den Kundenattributen (107) erzeugt.

4. Elektronisches Sicherheitsmodul (1) nach Anspruch 3, **dadurch gekennzeichnet, dass** es ein Attributaktualisierungsmodul (108) umfasst zum Entgegennehmen von Attributaktualisierungsinstruktionen und zur Aktualisierung der Kundenattribute (107) basierend auf entgegengenommenen Attributaktualisierungsinstruktionen.

5. Elektronisches Sicherheitsmodul (1) nach einem der Ansprüche 1 bis 4, **dadurch gekennzeichnet, dass** es ein Zeitbestimmungsmodul (109) zur Bestimmung von aktuellen Zeitangaben umfasst, und dass das Zertifizierungsmodul (105a) so beschaffen ist, dass es das Signaturzertifikat zudem aus den bestimmten Zeitangaben erzeugt.

6. Elektronisches Sicherheitsmodul (1) nach einem der Ansprüche 1 bis 5, **dadurch gekennzeichnet, dass** das Signierungsmodul (105) so beschaffen ist, dass es die digitale Kundensignatur aus einem ersten Fingerprint der zu signierenden Objektdaten erzeugt, dass das Zertifizierungsmodul (105a) so beschaffen ist, dass es das Signaturzertifikat zudem aus dem ersten Fingerprint erzeugt, dass es bei der Erzeugung des Signaturzertifikats einen zweiten Fingerprint aus den für die Erzeugung des Signaturzertifikats zu verwendenden Daten erzeugt, dass es aus dem erzeugten zweiten Fingerprint mit dem privaten Schlüssel des Sicherheitsanbieters (104) eine digitale Zertifikatsignatur erzeugt, und dass es das Signaturzertifikat aus der erzeugten Zertifikatsignatur und dem erzeugten zweiten Fingerprint bildet.

7. Elektronisches Sicherheitsmodul (1) nach einem der Ansprüche 1 bis 6, **dadurch gekennzeichnet, dass** es ein Schlüsselverwaltungsmodul (110) umfasst zum Entgegennehmen von Schlüsselverwaltungsinstruktionen und zum Aktivieren, Deaktivieren und Aktualisieren der im elektronischen Datenspeicher (10) gespeicherten Schlüssel basierend auf entgegengenommenen Schlüsselverwaltungsinstruktionen.

8. Elektronisches Sicherheitsmodul (1) nach einem der Ansprüche 1 bis 7, **dadurch gekennzeichnet, dass** es als Chipkarte, insbesondere als SIM-Karte ausgestaltet ist.

9. Elektronische Vorrichtung (4), umfassend:
- ein erstes elektronisches Sicherheitsmodul (41), mit einem ersten elektronischen Datenspeicher (410),
- einen im ersten elektronischen Datenspeicher (410) gespeicherten geheimen privaten Kundenschlüssel (102) eines ersten digitalen Schlüsselpaars, das aus dem geheimen privaten Kundenschlüssel (102) und einem öffentlichen Kundenschlüssel (101) besteht, und
- ein im ersten Sicherheitsmodul (41) angebrachtes Signierungsmodul (105) zum Erzeugen einer digitalen Kundensignatur aus zu signierenden Objektdaten mit dem privaten Kundenschlüssel (102),
**gekennzeichnet, durch**:
- ein zweites elektronisches Sicherheitsmodul (42) mit einem zweiten elektronischen Datenspeicher (420),
- ein im zweiten elektronischen Datenspeicher (420) gespeichertes zweites digitales Schlüsselpaar, bestehend aus einem öffentlichen Schlüssel eines Sicherheitsanbieters (103) und aus einem geheimen privaten Schlüssel des Sicherheitsanbieters (104),
- ein im zweiten Sicherheitsmodul (42) angebrachtes Authentifizierungsmodul (423) zum Authentifizieren des öffentlichen Kundenschlüssels (101),
- ein im zweiten Sicherheitsmodul (42) angebrachtes Verifizierungsmodul (421) zum Entgegennehmen der Kundensignatur, zum Entgegennehmen der zum Erzeugen der Kundensignatur verwendeten Objektdaten und zur Verifizierung der Kundensignatur unter Verwendung des authentifizierten öffentlichen Kundenschlüssels (101) und der entgegengenommenen zum Erzeugen der Kundensignatur verwendeten Objektdaten, und
- ein im zweiten Sicherheitsmodul (42) angebrachtes Zertifizierungsmodul (422) zum Erzeugen eines digitalen Signaturzertifikats aus der verifizierten Kundensignatur mit dem privaten Schlüssel des Sicherheitsanbieters (104).

10. Elektronische Vorrichtung (4) nach Anspruch 9, **dadurch gekennzeichnet, dass** das zweite Sicherheitsmodul (42) eine im zweiten elektronischen Datenspeicher (420) gespeicherte Kundenidentifizierung (106) umfasst, und dass das Zertifizierungsmodul (422) so beschaffen ist, dass es das Signaturzertifikat zudem aus der Kundenidentifizierung (106) erzeugt.

11. Elektronische Vorrichtung (4) nach einem der Ansprüche 9 oder 10, **dadurch gekennzeichnet, dass** das zweite Sicherheitsmodul (42) im zweiten elektronischen Datenspeicher (420) gespeicherte persönliche Kundenattribute (107) umfasst, und dass das Zertifizierungsmodul (422) so beschaffen ist, dass es das Signaturzertifikat zudem aus den Kundenattributen (107) erzeugt.

12. Elektronische Vorrichtung (4) nach Anspruch 11, **dadurch gekennzeichnet, dass** das zweite Sicherheitsmodul (42) ein Attributaktualisierungsmodul (108) umfasst zur Entgegennahme von Attributaktualisierungsinstruktionen und zur Aktualisierung der Kundenattribute (107) basierend auf entgegengenommenen Attributaktualisierungsinstruktionen.

13. Elektronische Vorrichtung (4) nach einem der Ansprüche 9 bis 12, **dadurch gekennzeichnet, dass** sie ein Zeitbestimmungsmodul (109) zur Bestimmung von aktuellen Zeitangaben umfasst und dass das Zertifizierungsmodul (422) so beschaffen ist, dass es das Signaturzertifikat zudem aus den bestimmten Zeitangaben erzeugt.

14. Elektronische Vorrichtung (4) nach einem der Ansprüche 9 bis 13, **dadurch gekennzeichnet, dass** das Signierungsmodul (105) so beschaffen ist, dass es die digitale Kundensignatur aus einem ersten Fingerprint der zu signierenden Objektdaten erzeugt, dass das Zertifizierungsmodul (422) so beschaffen ist, dass es das Signaturzertifikat zudem aus dem ersten Fingerprint erzeugt, dass es bei der Erzeugung des Signaturzertifikats einen zweiten Fingerprint aus den für die Erzeugung des Signaturzertifikats zu verwendenden Daten erzeugt, dass es aus dem erzeugten zweiten Fingerprint mit dem privaten Schlüssel des Sicherheitsanbieters (104) eine digitale Zertifikatsignatur erzeugt, und dass es das Signaturzertifikat aus der erzeugten Zertifikatsignatur und dem erzeugten zweiten Fingerprint bildet.

15. Elektronische Vorrichtung (4) nach einem der Ansprüche 9 bis 14, **dadurch gekennzeichnet, dass** das zweite Sicherheitsmodul (42) ein Schlüsselverwaltungsmodul (110) umfasst zur Entgegennahme von Schlüsselverwaltungsinstruktionen und zum Aktivieren, Deaktivieren und Aktualisieren der in der elektronischen Vorrichtung (4) gespeicherten Schlüssel basierend auf entgegengenommenen Schlüsselverwaltungsinstruktionen.

16. Elektronische Vorrichtung (4) nach einem der Ansprüche 9 bis 15, **dadurch gekennzeichnet, dass** mindestens eines der beiden Sicherheitsmodule (41, 42) als tragbares Modul ausgestaltet ist, das entfernbar mit der elektronischen Vorrichtung (4) verbunden ist.

17. Kryptographisches Sicherheitsverfahren,
- in welchem Sicherheitsverfahren in einer elektronischen Vorrichtung (1, 4) ein geheimer privater Kundenschlüssel (102) eines ersten digitalen Schlüsselpaars, das aus dem geheimen privaten Kundenschlüssel (102) und einem öffentlichen Kundenschlüssel (101) besteht, gespeichert wird,
- in welchem Sicherheitsverfahren in der elektronischen Vorrichtung (1, 4) mit dem privaten Kundenschlüssel (102) eine digitale Kundensignatur aus zu signierenden Objektdaten erzeugt wird, und
- in welchem Sicherheitsverfahren mit einem geheimen privaten Schlüssel eines zweiten digitalen Schlüsselpaars, das aus dem geheimen privaten Schlüssel eines Sicherheitsanbieters (104) und einem öffentlichen Schlüssel des Sicherheitsanbieters (103) besteht, ein digitales Signaturzertifikat aus der Kundensignatur erzeugt wird,
**dadurch gekennzeichnet,**
**dass** der geheime private Schlüssel des zweiten digitalen Schlüsselpaars in der elektronischen Vorrichtung (1, 4) gespeichert wird, und
**dass** das digitale Signaturzertifikat in der elektronischen Vorrichtung (1, 4) erzeugt wird.

18. Sicherheitsverfahren nach Anspruch 17, **dadurch gekennzeichnet, dass** in der elektronischen Vorrichtung (1, 4) vor der Erzeugung des digitalen Signaturzertifikats der öffentliche Kundenschlüssel (101) authentifiziert wird und die Kundensignatur unter Verwendung des authentifizierten öffentlichen Kundenschlüssels (101) und der zum Erzeugen der Kundensignatur verwendeten Objektdaten verifiziert wird.

19. Sicherheitsverfahren nach einem der Ansprüche 17 oder 18, **dadurch gekennzeichnet, dass** in der elektronischen Vorrichtung (1, 4) eine Kundenidentifizierung (106) gespeichert wird und dass das Signaturzertifikat zudem aus der Kundenidentifizierung (106) erzeugt wird.

20. Sicherheitsverfahren nach einem der Ansprüche 17 bis 19, **dadurch gekennzeichnet, dass** in der elektronischen Vorrichtung (1, 4) persönliche Kundenattribute (107) gespeichert werden, und dass das Signaturzertifikat zudem aus den Kundenattributen (107) erzeugt wird.

21. Sicherheitsverfahren nach Anspruch 20, **dadurch gekennzeichnet, dass** in der elektronischen Vorrichtung (1, 4) Attributaktualisierungsinstruktionen entgegengenommen werden und dass die Kundenattribute (107) basierend auf entgegengenommenen Attributaktualisierungsinstruktionen aktualisiert werden.

22. Sicherheitsverfahren nach einem der Ansprüche 17 bis 22, **dadurch gekennzeichnet, dass** in der elektronischen Vorrichtung (1, 4) aktuelle Zeitangaben bestimmt werden und dass das Signaturzertifikat zudem aus den bestimmten Zeitangaben erzeugt wird.

23. Sicherheitsverfahren nach einem der Ansprüche 17 bis 22, **dadurch gekennzeichnet, dass** die digitale Kundensignatur aus einem ersten Fingerprint der zu signierenden Objektdaten erzeugt, dass das Signaturzertifikat zudem aus dem ersten Fingerprint erzeugt wird, dass bei der Erzeugung des Signaturzertifikats ein zweiter Fingerprint aus den für die Erzeugung des Signaturzertifikats zu verwendenden Daten erzeugt wird, dass aus dem erzeugten zweiten Fingerprint mit dem privaten Schlüssel des Sicherheitsanbieters (104) eine digitale Zertifikatsignatur erzeugt wird, und dass das Signaturzertifikat aus der erzeugten Zertifikatsignatur und dem erzeugten zweiten Fingerprint gebildet wird.

24. Sicherheitsverfahren nach einem der Ansprüche 17 bis 23, **dadurch gekennzeichnet, dass** in der elektronischen Vorrichtung (1, 4) Schlüsselverwaltungsinstruktionen entgegengenommen werden, und dass die in der elektronischen Vorrichtung gespeicherten Schlüssel basierend auf entgegengenommenen Schlüsselverwaltungsinstruktionen aktiviert, deaktiviert oder aktualisiert werden.

## Claims

1. Portable, electronic security module (1), comprising:
- an electronic data store (10),
- a secret private customer key (102), stored in the electronic data store (10), of a first digital key pair consisting of a secret private customer key (102) and a public customer key (101), and
- a signature module (105) for generating a digital customer signature from object data to be signed using the private customer key (102),
**characterised by**:
- a secret private key, stored in the electronic data store (10), of a second digital key pair consisting of the secret private key (104) of a security provider and a public key (103) of the security provider, and
- a certification module (105a), installed in the signature module (105), for generating a digital signature certificate from the customer signature using the private key (104) of the security provider.

2. Electronic security module (1) according to claim 1, **characterised in that** it comprises a customer identification (106) stored in the electronic data store (10), and the certification module (105a) is designed such that it generates the signature certificate using additionally the customer identification (106).

3. Electronic security module (1) according to one of the claims 1 or 2, **characterised in that** it comprises personal customer attributes (107), stored in the electronic data store (10), and the certification module (1 05a) is designed such that it generates the signature certificate using additionally the customer attributes (107).

4. Electronic security module (1) according to claim 3, **characterised in that** it comprises an attribute updating module (108) for receiving attribute updating instructions and for updating the customer attributes (107) based on received attribute updating instructions.

5. Electronic security module (1) according to one of the claims 1 to 4, **characterised in that** it comprises a time determining module (109) for determining current time data, and the certification module (105a) is designed such that it generates the signature certificate using additionally the determined time data.

6. Electronic security module (1) according to one of the claims 1 to 5, **characterised in that** the signature module (105) is designed such that it generates the digital customer signature from a first fingerprint of the object data to be signed, <and> **in that** the certification module (1 05a) is designed such that it generates the signature certificate using additionally the first fingerprint, when generating the signature certificate it generates a second fingerprint from the data to be used for the generation of the signature certificate, it generates a digital certificate signature from the generated second fingerprint using the private key (104) of the security provider, and it forms the signature certificate from the generated certificate signature and from the generated second fingerprint.

7. Electronic security module (1) according to one of the claims 1 to 6, **characterised in that** it comprises a key administration module (110) for receiving key administration instructions and for activating, deactivating and updating the keys stored in the electronic data store (10) based on received key administration instructions.

8. Electronic security module (1) according to one of the claims 1 to 7, **characterised in that** it is designed as a chipcard, in particular a SIM card.

9. Electronic device (4), comprising:
- a first electronic security module (41), with a first electronic data store (410),
- a secret private customer key (102), stored in the first electronic data store (410), of a first digital key pair consisting of the secret private customer key (102) and a public customer key (101), and
- a signature module (105), installed in the first security module (41), for generating, using the private customer key (102), a digital customer signature from object data to be signed,
**characterised by**:
- a second electronic security module (42) with a second electronic data store (420),
- a second digital key pair, stored in the second electronic data store (420), consisting of a public key (103) of a security provider and a secret private key (104) of the security provider,
- an authentication module (423), installed in the second security module (42), for authenticating the public customer key (101),
- a verification module (421), installed in the second security module (42), for receiving the customer signature, for receiving the object data used for generating the customer signature, and for verifying the customer signature using the authenticated public customer key (101) and the received object data used for generating the customer signature, and
- a certification module (422), installed in the second security module (42), for generating a digital signature certificate from the verified customer signature using the private key (104) of the security provider.

10. Electronic device (4) according to claim 9, **characterised in that** the second security module (42) comprises a customer identification (106) stored in the second electronic data store (420), and the certification module (422) is designed such that it generates the signature certificate using additionally the customer identification (106).

11. Electronic device (4) according to one of the claims 9 or 10, **characterised in that** the second security module (42) comprises personal customer attributes (107) stored in the second electronic data store (420), and the certification module (422) is designed such that it generates the signature certificate using additionally the customer attributes (107).

12. Electronic device (4) according to claim 11, **characterised in that** the second security module (42) comprises an attribute updating module (108) for receiving attribute updating instructions and for updating the customer attributes (107) based on received attribute updating instructions.

13. Electronic device (4) according to one of the claims 9 to 12, **characterised in that** it comprises a time determining module (109) for determining current time data, and the certification module (422) is designed such that it generates the signature certificate using additionally the determined time data.

14. Electronic device (4) according to one of the claims 9 to 13, **characterised in that** the signature module (105) is designed such that it generates the digital customer signature from a first fingerprint of the object data to be signed, <and> **in that** the certification module (422) is designed such that it generates the signature certificate using additionally the first fingerprint, when generating the signature certificate it generates a second fingerprint from the data to be used for the generation of the signature certificate, it generates a digital certificate signature from the generated second fingerprint using the private key (104) of the security provider, and it forms the signature certificate from the generated certificate signature and from the generated second fingerprint.

15. Electronic device (4) according to one of the claims 9 to 14, **characterised in that** the second security module (42) comprises a key administration module (110) for receiving key administration instructions and for activating, deactivating and updating the keys stored in the electronic device (4) based on received key administration instructions.

16. Electronic device (4) according to one of the claims 9 to 15, **characterised in that** at least one of the two security modules (41, 42) is designed as a portable module, which is removably connected to the electronic device (4).

17. Cryptographic security method,
- in which security method a secret private customer key (102) of a first digital key pair, consisting of the secret private customer key (102) and a public customer key (101), is stored in an electronic device (1, 4),
- in which security method, in the electronic device (1, 4) using the private customer key (102), a digital customer signature is generated from the object data to be signed, and
- in which security method, using a secret private key of a second digital key pair, consisting of the secret private key of a security provider (104) and a public key of the security provider (104), a digital signature certificate is generated from the customer signature,
**characterised**
**in that** the secret private key of the second digital key pair is stored in the electronic device (1, 4), and
**in that** the digital signature certificate is generated in the electronic device (1, 4).

18. Security method according to claim 17, **characterised in that** the public customer key (101) is authenticated in the electronic device (1, 4) before generation of the digital signature certificate, and the customer signature is verified using the authenticated public customer key (101) and the object data used for generating the customer signature.

19. Security method according to one of the claims 17 or 18, **characterised in that** a customer identification (106) is stored in the electronic device (1, 4), and the signature certificate is generated using additionally the customer identification (106).

20. Security method according to one of the claims 17 to 19, **characterised in that** personal customer attributes (107) are stored in the electronic device (1, 4), and the signature certificate is generated using additionally the customer attributes (107).

21. Security method according to claim 20, **characterised in that** attribute updating instructions are received in the electronic device (1, 4), and the customer attributes (107) are updated based on received attribute updating instructions.

22. Security method according to one of the claims 17 to 22, **characterised in that** current time data are determined in the electronic device (1, 4), and the signature certificate is generated using additionally the determined time data.

23. Security method according to one of the claims 17 to 22, **characterised in that** the digital customer signature is generated from a first fingerpnnt of the object data to be signed, furthermore the signature certificate is generated from the first fingerprint, when generating the signature certificate a second fingerprint is generated from the data to be used for the generation of the signature certificate, a digital certificate signature is generated from the generated second fingerprint using the private key (104) of the security provider, and the signature certificate is formed from the generated certificate signature and from the generated second fingerprint.

24. Security method according to one of the claims 17 to 23, **characterised in that** key administration instructions are received in the electronic device (1, 4), and the keys stored in the electronic device are activated, deactivated or updated based on received key administration instructions.

## Revendications

1. Module de sécurité électronique portable (1), comprenant :
- une mémoire de données électronique (10)
- une clé de client privée secrète (102) stockée dans la mémoire de données électronique (10), d'une première paire de clés numériques qui se composent de la clé de client (102) privée secrète et d'une clé client publique (101) et
- un module de signature (105) pour la génération d'une signature numérique de client à partir de données d'objets à signer avec la clé de client (102) privée,
**caractérisé par**
- une clé privée secrète stockée dans la mémoire de données électronique (10), d'une seconde paire de clés numériques qui se composent de la clé privée secrète d'un fournisseur de services de sécurité (104) et d'une clé publique du fournisseur de services de sécurité (103),
- un module de certification (105a) placé dans le module de signature (105) pour générer un certificat numérique de signature à partir de la signature client avec la clé privée du fournisseur de services de sécurité (104).

2. Module électronique de sécurité (1) selon la revendication 1, **caractérisé en ce qu'**il comprend une identification de client (106) stockée dans la mémoire de données électronique (10), et **en ce que** le module de certification (105a) est réalisé de sorte qu'il génère le certificat de signature en outre à partir de l'identification client (106)

3. Module électronique de sécurité (1) selon l'une des revendications 1 ou 2, **caractérisé en ce qu'**il comprend des attributs personnels (107) de clients stockés dans la mémoire de données électronique (10) et **en ce que** le module de certification (105a) est réalisé de sorte qu'il génère le certificat de signature en outre à partir des attributs de clients (107).

4. Module de sécurité électronique (1) selon la revendication 3, **caractérisé en ce qu'**i comprend un module d'actualisation d'attributs (108) pour la réception d'instructions d'actualisation d'attributs et pour l'actualisation d'attributs de clients (107) en se basant sur les instructions d'actualisation d'attributs.

5. Module de sécurité électronique (1) selon l'une des revendications 1 à 4, **caractérisé en ce qu'**il comprend un module de détermination de temps (109) pour la détermination d'indications actuelles de temps et **en ce que** le module de certification (105a) est réalisé de sorte qu'il génère le certificat de signature en outre à partir des indications définies de temps.

6. Module de sécurité électronique (1) selon l'une des revendications 1 à 5, **caractérisé en ce que** le module de signature (105) est réalisé de sorte qu'il génère la signature numérique du client à partir d'une première empreinte digitale des données d'objet à signer, **en ce que** le module de certification (105a) est réalisé de sorte qu'il génère le certificat de signature en outre à partir de la première empreinte digitale, **en ce que** lors de la génération du certificat de signature, il génère une seconde empreinte digitale à partir des données utilisées pour la génération du certificat de signature, **en ce qu'**il génère à partir de la seconde empreinte digitale générée avec la clé privée du fournisseur de service de sécurité (104) une signature de certificat numérique et **en ce qu'**il forme le certificat de signature à partir de la signature de certificat générée et de la seconde empreinte digitale généré.

7. Module de sécurité électronique (1) selon l'une des revendications 1 à 6, **caractérisé en ce qu'**il comprend un module de gestion de clé (110) pour la réception d'instructions de gestion de clé et pour l'activation, la désactivation et l'actualisation des clés stockées dans la mémoire de données électronique (10) en se basant sur les instructions de gestion de clé réceptionnées. '

8. Module de sécurité électronique (1) selon l'une des revendications 1 à 7, **caractérisé en ce qu'**il est configuré comme une carte à puce, en particulier comme une carte SIM.

9. Dispositif électronique (4) comprenant
- un premier module de sécurité électronique (41) avec une première mémoire de données électronique (410),
- une clé de client privée secrète (102) stockée dans la première mémoire de données électronique (410), d'une première paire de clés numériques qui se composent de la clé de client (102) privée secrète et d'une clé client publique (101) et
- un module de signature (105) logé dans le premier module de sécurité (41) pour la génération d'une signature numérique de client à partir de données d'objets à signer avec la clé de client privée (102),
**caractérisé par**
- un second module de sécurité électronique (42) avec une seconde mémoire électronique de données (420),
- une seconde paire de clés numériques stockées dans la seconde mémoire électronique de données numériques (420), qui se composent de la clé privée secrète d'un fournisseur de service de sécurité (103) et d'une clé publique du fournisseur de services de sécurité (104)
- un module d'authentification (423) logé dans le second module de sécurité (42) permettant l'authentification de la clé publique de client (101),
- un module de vérification (421) logé dans le second module de sécurité (42) permettant la réception de la signature de client, la réception des données d'objet utilisées pour la génération de la signature client et permettant la vérification de la signature client en utilisant la clé de client publique authentifiée (101) et les objets de données réceptionnés et utilisés pour générer la signature de client, et
- un module de certification (422) logé dans le second module de sécurité (42) pour la génération d'un certificat de signature numérique à partir de la signature client vérifiée avec la clé privée du fournisseur de service de sécurité (104).

10. Dispositif électronique (4) selon la revendication 9, **caractérisé en ce que** le second module de sécurité (42) comprend une identification de client (106) stockée dans la seconde mémoire de données électronique (420) et **en ce que** le module de certification (422) est réalisé de sorte qu'il génère le certificat de signature en outre à partir de l'identification client (106).

11. Dispositif électronique (4) selon l'une des revendications 9 ou 10, **caractérisé en ce que** le second module de sécurité (42) comprend des attributs personnels de client (107) stockées dans la seconde mémoire de données électronique (420) et **en ce que** le module de certification (422) est réalisé de manière à générer le certificat de signature en outre à partir des attributs de client (107).

12. Dispositif électronique (4) selon la revendication 11, **caractérisé en ce que** le second module de sécurité (42) comprend un module d'actualisation d'attribut (108) pour la réception d'instructions d'actualisation d'attributs et pour l'actualisation des attributs de client (107) en se basant sur des instructions d'actualisation d'attributs réceptionnées.

13. Dispositif électronique (4) selon l'une des revendications 9 à 12, **caractérisé en ce qu'**il comprend un module de détermination de temps (109) pour la détermination d'indications actuelles de temps et **en ce que** le module de certification (422) est réalisé de sorte qu'il génère le module de signature en outre à partir des indications définies de temps

14. Dispositif électronique (4) selon l'une des revendications 9 à 13, **caractérisé en ce que** le module de signature (105) est réalisé de sorte qu'il génère la signature numérique de client à partir de la première empreinte digitale des données d'objets à signer, **en ce que** le module de certification (422) est réalisé de sorte qu'il génère le certificat de signature en outre à partir de la première empreinte digitale, **en ce qu'**il génère lors de la génération du certificat de signature une seconde empreinte digitale à partir des données à utiliser pour la génération du certificat de signature, **en ce qu'**il génère à partir de la seconde empreinte digitale réalisée avec la clé privée du fournisseur de service de sécurité (104) une signature numérique de certificat et **en ce qu'**il forme le certificat de signature à partir de la signature produite de certificat et de la seconde empreinte digitale générée.

15. Dispositif électronique (4) selon l'une des revendications 9 à 14, **caractérisé en ce que** le second module de sécurité (42) comprend un module de gestion de clé (110) pour la réception d'instructions de gestion de clé et pour l'activation, la désactivation et l'actualisation des clés stockées dans le dispositif électronique (4) en se basant sur des instructions réceptionnées de gestion de clé.

16. Dispositif électronique (4) selon l'une des revendications 9 à 15, **caractérisé en ce qu'**au moins l'un des module de sécurité (41, 42) sont réalisés comme un module portable qui est relié de manière amovible au dispositif électronique (4).

17. Procédé de sécurité cryptographique
- procédé de sécurité dans lequel une clé de client (102) privée secrète d'une première paire de clé numérique est stockée dans un dispositif électronique (1, 4), la paire se composant de la clé de client privée secrète (102) et d'une clé publique de client (101),
- procédé de sécurité dans lequel une signature numérique de client est générée à partir des objets de données à signer dans le dispositif électronique (1, 4) avec la clé privée de client (102), et
- procédé de sécurité dans lequel avec une clé privée secrète d'une seconde paire de clés numériques qui se compose de la clé privée secrète d'un fournisseur de sécurité (104) et d'une clé publique du fournisseur de sécurité (103), il est généré un certificat numérique de signature à partir de la signature de client,
**caractérisé**
**en ce que** la clé secrète privée de la seconde paire numérique de clé est stockée dans le dispositif électronique (1, 4), et
**en ce que** le certificat de signature numérique est généré dans le dispositif électronique (1, 4).

18. Procédé de sécurité selon la revendication 17, **caractérisé en ce que** dans le dispositif électronique (1, 4) avant la génération du certificat numérique de signature, la clé publique de client (101) est authentifiée et la signature de client est vérifiée en utilisant la clé authentifiée publique de client (101) et des données d'objet utilisées pour la génération de la signature de client.

19. Procédé de sécurité selon l'une des revendications 17 ou 18, **caractérisé en ce que** dans le dispositif électronique (1, 4), il est stocké une identification de client (106) et **en ce que** le certificat de signature est généré en outre à partir de l'identification de client (106).

20. Procédé de sécurité selon l'une des revendications 17 à 19, **caractérisé en ce que** dans le dispositif électronique (1, 4), il est stocké des attributs personnels de client (107) et **en ce que** le certificat de signature est généré en outre à partir des attributs de client (107).

21. Procédé de sécurité selon la revendication 20, **caractérisé en ce que** dans le dispositif électronique (1, 4), il est réceptionné des instructions d'actualisation d'attribut et **en ce que** les attributs de client (107) sont actualisés en se basant sur des instructions réceptionnées d'actualisation d'attribut.

22. Procédé de sécurité selon l'une des revendications 17 à 22 , **caractérisé en ce que** dans le dispositif électronique (1, 4), des indications actuelles de temps sont définies et **en ce que** le certificat de signature est généré en outre à partir des indications définies de temps.

23. Procédé de sécurité selon l'une des revendications 17 à 22, **caractérisé en ce que** la signature numérique de client est générée à partir d'une première empreinte digitale des données d'objet à signer et **en ce que** le certificat de signature est généré en outre à partir des indications définies de temps, **en ce que** lors de la génération du certificat de signature, il est généré une seconde empreinte digitale à partir des données à utiliser pour la génération de la signature de certificat, **en ce qu'**à partir de la seconde empreinte digitale, il est généré avec la clé privée du fournisseur de sécurité (104) une signature numérique de certificat et **en ce que** le certificat de signature est formé à partir de la signature de certificat générée et de la seconde empreinte digitale générée.

24. Procédé selon l'une des revendications 17 à 23, **caractérisé en ce que** dans le dispositif électronique (1, 4), il est réceptionné des instructions de gestion de clé et **en ce que** les clés stockées dans le dispositif électronique sont activées, désactivées ou actualisées en se basant sur des instructions de gestion de clé réceptionnées.
